# EUROPÄISCHE PATENTSCHRIFT

(11) **EP 1 378 319 B1**
(45) Veröffentlichungstag und Bekanntmachung des Hinweises auf die Patenterteilung: **07.06.2006**
(21) Anmeldenummer: 03015001.5
(22) Anmeldetag: 02.07.2003
(51) Int. Cl.: B23Q 5/28, B23Q 5/36, B23Q 1/58, H02K 41/02

(54) **Antriebssystem mit Linearmotoren sowie Vorschubachse einer Werkzeugmaschine mit einem solchen Antriebssystem**
Drive system with linear motors and feed axis of a machine tool with such a drive system
Système d'avance à moteurs linéaires et poupée de machine-outil avec un tel système d'avance

(30) Priorität: 04.07.2002 DE 10230022
(43) Veröffentlichungstag der Anmeldung: 07.01.2004
(73) Patentinhaber: Gebr. Heller Maschinenfabrik GmbH, D-72622 Nürtingen (DE)
(72) Erfinder: Siegler, Reinhold, 73278 Schlierbach (DE); Zapf, Bernd, 73252 Lenningen (DE)
(74) Vertreter: Kohl, Karl-Heinz

(56) Entgegenhaltungen:
- DE-A- 3 834 900
- DE-A- 10 030 815
- DE-A- 19 955 872
- US-A- 4 595 870
- US-B1- 6 402 381

## Beschreibung

Die Erfindung betrifft ein Antriebssystem nach dem Oberbegriff des Anspruches 1 sowie eine Vorschubachse einer Werkzeugmaschine mit wenigstens einem solchen Antriebssystem nach dem Oberbegriff des Anspruches 16.

Bei CNC-Bearbeitungszentren wird die Werkstückbearbeitung durch programmierbare Werkzeugbewegungen ausgeführt. Alle Werkzeug- Vorschubbewegungen und Spannvorgänge werden anhand eingegebener Daten durch einen Computer gesteuert. Solche Bearbeitungszentren haben eine große Fertigungsgenauigkeit sowie eine hohe Fertigungsgeschwindigkeit und sind flexibel einsetzbar. Gerade aufgrund der hohen Flexibilität werden vor allem von der Automobilindustrie sowie von der Zulieferindustrie Fertigungssysteme eingesetzt, die aus einer Vielzahl von CNC-Bearbeitungszentren bestehen, die mit Einrichtungen zur automatischen Beladung und Entladung von Werkstücken versehen und mit Verkettungseinrichtungen gekoppelt sind. Komplexe Softwareprogramme steuern den korrekten Ablauf aller Komponenten eines solchen Systems. Der wirtschaftliche Betrieb ist nur bei hoher Verfügbarkeit des Gesamtsystems gewährleistet. Dies setzt jedoch voraus, daß jedes einzelne der eingesetzten Bearbeitungszentren mit hoher zuvorlässigkeit und Genauigkeit arbeitet.

Die Leistungskennwerte der Bearbeitungszentren haben sich in den vergangenen Jahren ständig gesteigert. So werden insbesondere bei der Bearbeitung von Leichtmetallen, etwa Aluminium oder Magnesium, beim Bohren oder Fräsen Schnittgeschwindigkeiten von mehreren tausend Metern pro Minute erreicht. Vielfach scheitert der Einsatz noch höherer Schnitteschwindigkeiten nicht an der Leistungsfähigkeit der Schneidstoffe, sondern an der maximalen Drehzahl der Hauptspindel. Durch die hohen Schnittgeschwindigkeiten wird der Anteil der Hauptzeit an der Gesamtbearbeitungszeit immer geringer, wenn die Nebenzeiten ansonsten unverändert bleiben. Großes Potential in der Erhöhung der Leistungsfähigkeit von Bearbeitungszentren steckt deshalb in der Reduzierung der Nebenzeiten. Wesentlichen Anteil an der Nebenzeit haben die Positionierbewegungen der linearen Achsen sowie die sogenannte Span-zu-Span-Zeit. Neben extrem schnellen Werkzeugwechseleinrichtungen werden insbesondere die Parameter maximale Verfahrgeschwindigkeit sowie Beschleunigung der linearen Achsen erhöht.

Die am meisten verwendeten Antriebe für die Vorschubachsen von Bearbeitungszentren sind Kugelgewindeantriebe. Derzeit werden damit Eilganggeschwindigkeiten von bis zu 100 m/min und Beschleunigungen von bis zu 10 m/s² in industriellen Anwendungen realisiert. Es hat sich aber herausgestellt, daß die Kugelgewindeantriebe diesen Belastungen nicht gewachsen sind und die geforderte Lebensdauer, ausgedrückt mit der Kennzahl MTBF (Mean Time Between Failure), nicht erreicht wird. Der dann erforderliche Austausch der Kugelgewindeantriebe ist zwar verhältnismäßig einfach zu bewerkstelligen. Er verursacht dennoch einen Maschinenstillstand von mehreren Stunden bis zu einigen Tagen, wodurch die durch die hohen Verfahrgeschwindigkeiten und Beschleunigungen erzielten Produktivitätsgewinne weitgehend oder vollständig zunichte gemacht werden. Im Extremfall liegt die Gesamtproduktivität dann sogar unter derjenigen von langsameren Bearbeitungszentren. Bei einem Fertigungssystem kann der Ausfall eines einzelnen Bearbeitungszentrums auch die Produktivität des Gesamtsystems herabsetzen, etwa dann, wenn diese Maschine einen Engpaß darstellt. Selbst Strategien wie ersetzende Maschinen können dies nicht mehr verhindern.

Die Automobilindustrie mit ihren durch Just-in-Time gekennzeichneten Produktionsstrategien ist jedoch in hohem Maße auf zuverlässige Fertigungssysteme angewiesen.

Ein weiteres Antriebskonzept für die Vorschubachsen von Bearbeitungszentren sind Linearmotorantriebe. Durch die direkte, berührungslose Krafteinleitung mittels sogenannter Primär- und Sekundärteile des Motors wird die MTBF des Achsantriebes gegenüber der MTBF eines Kugelgewindetriebes erhöht. Auch die Leistungskennwerte sind höher. Es werden derzeit Eilganggeschwindigkeiten von bis zu 120 m/min und Beschleunigungswerte von bis zu 15 m/s² in industriellen Anwendungen realisiert. Bisher ausgeführte Linearmotor-Bearbeitungszentren sind hauptsächlich als Einzel- oder Doppelmotormaschinen ausgeführt, um mit einer möglichst geringen Anzahl von Primär- und Sekundärteilen auszukommen. Die Primärteile haben dabei ein sehr großes Bauvolumen. Aus zumeist wirtschaftlichen Gründen wird das Primärteil mit großer Nutteilung und das Sekundärteil mit großer Polteilung ausgeführt. Durch diese Konstellation weisen die Motoren eine hohe Induktivität im Primärteil und eine niedrigere Betriebsfrequenz auf. Die hohe Induktivität im Primärteil führt dazu, daß die Stromanstiegsgeschwindigkeit im Stromregelkreis des speisenden Drehstromsystems in der Bandbreite begrenzt ist und der Motor gegenüber anderen Systemen, etwa Kugelgewindetrieben, eine geringere dynamische Laststeifigkeit hat. Unter dynamischer Laststeifigkeit wird die Fähigkeit eines Antriebes zu schnellem Ansprechen und Ausregeln von auftretenden Störgrößen verstanden.

Bedingt durch das große Bauvolumen kommen im Sekundärteil große Einzelmagnete zum Einsatz, die eine große Polteilung zur Folge haben. Diese Polteilung legt die Betriebsfrequenz des Motors im aktiven Betrieb fest. Weil die Betriebsfrequenz im Vergleich zu rotatorischen Motoren niedrig ist, ist der Wirkungsgrad niedrig und das Bauvolumen des magnetischen Kreises verhältnismäßig groß. Dies hat zur Folge, daß der Motor sehr viel Bauraum im Bearbeitungszentrum benötigt, einer hohen Kühlleistung bedarf und ein sehr oberwellenarmes, speisendes Drehstromsystem erfordert, um die einem Kugelgewindetrieb vergleichbaren Gleichlaufeigenschaften zu erreichen.

In den meisten Fällen werden in Bearbeitungszentren Linearmotoren eingebaut, die nicht als eigenständige, funktionsfähige Baugruppen vom Motorshersteller geliefert werden, sondern im wesentlichen als zwei getrennte Teile: dem Primär- und dem Sekundärteil. Beide Motorteile sind für sich mit der erforderlichen Schutzart, der elektrischen Anschlußtechnik, mit Kühlanschlüssen sowie Sensoren ausgestattet. Es ist nun Aufgabe des Maschineherstellers, Primärteil und Sekundärteil so in die Maschine zu integrieren, daß ein funktionsfähiger Antrieb entsteht. Die Schutzart, die Montierbarkeit, der Schutz vor Verschmutzung und weitere Merkmale werden durch die Konstruktion festgelegt. Der Maschinenhersteller wird damit in Teilen seiner Maschine zum Motorenhersteller. Der im Prinzip einfache Einbau gestaltet sich in der realen Einbausituation sehr komplex. Das Primärteil wird meist am beweglichen Maschinenbauteil, wie etwa dem Schlitten, angebracht, und das Sekundärteil am feststehenden Bauteil, zum Beispiel am Maschinengestell. Aufgrund der hohen Verlustleistung müssen sowohl das Primär- als auch das Sekundärteil gekühlt werden, weil die entstehende Wärme die Maschinenkonstruktion aufheizen würde und Präzisionsbearbeitungen dann nicht mehr möglich wären. Die Zu- und Ableitungen für Kühlwasser sind, zumindest am Primärteil, beweglich vorzusehen. Durch die hohen Verfahrgeschwindigkeiten sind die Leitungen einer enormen Belastung ausgesetzt. Das gleiche gilt für die Zuführung der elektrischen Anschlüssen mitsamt den Kabelführungen

Bei bekannten Bearbeitungszentren werden sogenannte Synchronlinearmotoren eingesetzt, bei denen das Sekundärteil aus einer Vielzahl von starken Dauermagneten besteht, die in einer definierten Weise in ein Trägermaterial, beispielsweise in eine Stahlplatte, eingebettet sind. Die Montage der Motoren gestaltet sich dann besonders schwierig, weil verhindert werden muß, daß Primär- und Sekundärteil wegen der großen magnetischen Anziehungkräfte miteinander in Berührung kommen. Für die Montagearbeiterbesteht deshalb eine ernsthafte Verletzungsgefahr, und eine Trennung beider Teile ist nahezu unmöglich. Durch die magnetischen Anziehungskräfte und durch die offene Bauweise gelangen Schmutzpartikel, insbesondere magnetisierbare Späne oder Stahlspäne, leicht in den Luftspalt zwischen Primär- und Sekundärteil.

Besonders aufwendig gestaltet sich eine Reparatur der Linearmotoren in Bearbeitungszentren. Durch die Integration der Motoren in die Maschinestruktur müssen zunächst viele weitere Maschinenbauteile demontiert werden, um die Motoren demontieren zu können. Vorab muß die Kühlflüssigkeit vollständig aus dem Kühlkreislauf entfernt werden, da sie ansonsten in empfindliche Bauteile, wie Wegmeßsysteme, eindringen könnte. Gegebenenfalls werden spezielle Vorrichtungen zum Ausbau der Linearmotoren benötigt, um ein Berühren von Primär- und Sekundärteilen sicher zu verhindern. Der Zeitaufwand zum Austausch eines Linearmotors ist im Vergleich zum Austausch eines Kugelgewindetriebes offensichtlich um ein Vielfaches höher. Die hohe Produktivität der Maschinen wird dadurch erheblich reduziert, und die Gesamtproduktivität kann sogar unter das Niveau von Bearbeitungszentren mit Kugelgewindetrieben fallen. Unter Gesamtproduktivität wird die Ausbringung über einen längeren Zeitpunkt verstanden, etwa über ein Jahr oder über die gesamte Einsatzdauer einer Maschine. Weil die Investitionskosten von Bearbeitungszentren mit Linearmotoren höher sind als die von Bearbeitungszentren mit Kugelgewindetrieben, ergeben sich bei gleicher Ausbringung höhere Stückkosten.

Beim gattungsgemäßen Antriebssystem (DE 100 30 815 A) sind an der Innenseite eines Gehäuses Primärteile zweier Linearmotoren befestigt. Zwischen ihnen liegt das Schubelement, das die Sekundärteile der Linearmotoren trägt. An den Schmalseiten ist das Schubelement mit Führungsschienen versehen, die in seitlichen Führungen laufen, die ebenfalls an der Innenseite einander gegenüberliegender Gehäuseseitenwände befestigt sind. Das Antriebssystem hat aufgrund dieser Ausbildung verhältnismäßig große Abmessungen und kann dort nicht eingesetzt werden, wo es auf kompakte Bauformen ankommt.

Bei einem anderen bekannten Antriebssystem (US 6 402 381 B) ist ein im Querschnitt kreuzförmig ausgebildetes Schubelement vorgesehen, das an den Stirnseiten seiner Arme Führungsschienen trägt, die in Führungen gelagert sind, die an der Innenseite von Gehäuseseitenwänden befestigt sind. Die Linearmotoren befinden sich im Innenraum des Gehäuses. Auch dieses Antriebssystem baut nicht kompakt.

Der Erfindung liegt die Aufgabe zugrunde, das gattungsgemäße Antriebssystem und die gattungsgemäße Vorschubachse so auszubilden, daß die genannten Nachteile überwunden werden.

Diese Aufgabe wird beim gattungsgemäßen Antriebssystem erfindungsgemäß mit den kennzeichnenden Merkmalen des Anspruches 1 und bei der gattungsgemäßen Vorschubachse erfindungsgemäß mit den kennzeichnenden Merkmalen des Anspruches 16 gelöst.

Das erfindungsgemäße Antriebssystem weist mindestens zwei Linearmotoren auf, die in einem gemeinsamen Gehäuse untergebracht sind. Diese Linearmotoren sind im Gehäuse so angeordnet, daß sich die magnetischen Anziehungskräfte zwischen den einzelnen Linearmotoren zumindest weitgehend aufheben. Die Primärteile des Antriebssystems sind elektrisch parallel geschaltet und in das Gehäuse integriert. Das Schubelement ist an wenigstens zwei diametral einander gegenüberliegenden Ecken geführt. Das Antriebssystem hat dadurch einen sehr kompakten Aufbau und kann kostengünstig gefertigt werden. Bei der erfindungsgemäßen Vorschubachse ist ein Teil des Antriebssystems am Festlager der Werkzeugmaschine befestigt. Die Werkzeugmaschine ist vorteilhaft ein Bearbeitungszentrum, bei dem jede Vorschubachse mit einem Linearmotor-Antriebssystem versehen ist. Es zeichnet sich durch ein hohes Leistungsvolumen und Kompaktheit aus. Das Antriebssystem verfügt vorteilhaft über Schnittstellen für Mechanik, Elektrik, Informationen und Kühlung, die eine einfache und schnelle Montage und Demontage im Bearbeitungszentrum ermöglichen. Jedes Antriebssystem besteht aus einer Vielzahl mehrerer Einzellinearmotoren, die in einem umfangsseitig geschlossenen Gehäuse angeordnet sind. Die einzelnen Linearmotoren weisen vorteilhaft eine hohe Polteilung auf und werden parallel verschaltet. Dadurch ergibt sich eine hohe Betriebsfrequenz, eine dynamische Laststeifigkeit sowie eine hohe Vorschubkraft

Die Beschleunigung wird vorteilhaft mit einem Beschleunigungssensor gemessen, der im Vergleich zu Wegmeßsystemen die Beschleunigungswerte direkt, also ohne Berechnung aus Weginformationen, liefert und dadurch ein verbessertes Regelverhalten erbringt.

Weitere Merkmale der Erfindung ergeben sich aus den weiteren Ansprüchen, der Beschreibung und den Zeichnungen.

Die Erfindung wird anhand einiger in den Zeichnungen dargestellter Ausführungsformen näher erläutert. Es zeigen
- Fig. 1: im Querschnitt ein Antriebssystem, dass nicht unter den Schutzbereich der beanspruchten Erfindung fällt, weil die Primärteile nicht in Gehäuse integriert sind.
- Fig. 2: in einer Darstellung entsprechend Fig. 1 eine zweite Ausführungsform eines Antriebssystems, dass nicht unter den Schutzbereich der beanspruchten Erfindung fällt, weil die Primärteile nicht in Gehäuse integriert sind.
- Fig. 2a: in einer Darstellung entsprechend Fig. 2 eine Ausführungsform eines erfindungsgemäßen Antriebssystems,
- Fig. 3: einen Längsschnitt durch das Antriebssystem gemäß Fig. 1,
- Fig. 4 bis Fig. 9: jeweils in schematischer Darstellung verschiedene Ausführungsformen von erfindungsgemäßen Vorschubachsen von Werkzeugmaschinen mit Antriebssystemen.

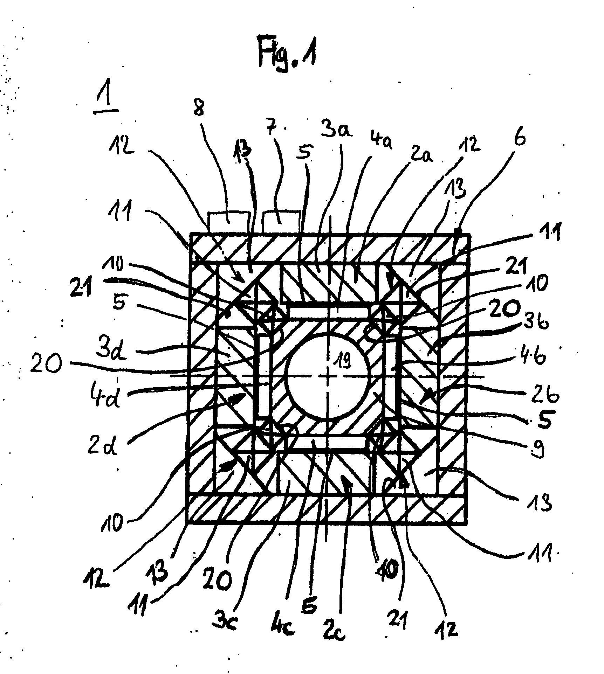

Fig. 1 zeigt in einem Querschnitt ein als Linearmotor-Antriebsmodul 1 ausgebildetes Antriebssystem, das mit vier Einzelmotoren 2a bis 2d ausgeführt ist. Die Linearmotoren 2a bis 2d liegen in einem Gehäuse 6, das im Ausführungsbeispiel quadratischen Querschnitt hat. In montiertem Zustand ist das Gehäuse 6 ein umfangsseitig geschlossener Körper. Die Linearmotoren 2a bis 2d liegen jeweils in halber Breite jeder Gehäuseseite. Die Linearmotoren 2a bis 2d haben jeweils einen Primärteil 3a bis 3d, dem jeweils unter Bildung eines Luftspaltes 5 ein Sekundärteil 4a bis 4d gegenüberliegt. Die Primärteile 3a bis 3d sind an der Innenseite des Gehäuses 6 befestigt. Innerhalb des Gehäuses 6 sind die Primärteile 3a bis 3d mit einer Verkabelung parallel geschaltet, wodurch sich eine geringe Induktivität und damit herausragende dynamische Eigenschaften des Antriebsmoduls 1 ergeben.

Als Schnittstelle zur Stromversorgung eines das Antriebsmodul 1 aufweisenden Bearbeitungszentrums ist das Gehäuse 6 außenseitig mit wenigstens einem Anschluß 7 für die Stromversorgung versehen.

Die Primärteile 3a bis 3d sind im Spulenkörper mit (nicht dargestellten) Kühlbohrungen versehen, die vorzugsweise von einem flüssigen Kühlmedium durchflossen werden, das die entstehende Wärmeenergie abführt. Die einzelnen Kühlkreisläufe sind parallel geschaltet, so daß sich in allen vier Primärteilen 3a bis 3d gleiche Temperaturen einstellen können. Die Verrohrung erfolgt innerhalb des Gehäuses 6. Als Schnittstelle zu einem Kühlaggregat ist außen am Gehäuse 6 wenigstens ein Anschluß 8 mit Steckkupplungen für die Zuleitung und Ableitung des Kühlmittels vorgesehen. Wird eine besonders hohe Temperaturkonstanz gefordert, so werden im Gehäuse 6 zusätzliche Kühlbohrungen eingebracht. Mit einem separaten Kühlkreislauf kann die Temperatur in einem Bereich von wenigen K, zum Beispiel 2 K, konstant gehalten werden. Besonders vorteilhaft ist es dann, wenn zwischen dem Primärteil 3a bis 3d und dem Gehäuse 6 eine wärmedämmende Zwischenschicht vorgesehen ist.

Im Zentrum des Gehäuses 6 befindet sich eine auf Führungen 12 gelagerte Schubstange 9, die im Ausführungsbeispiel quadratischen Querschnitt hat. Zur Gewichtsreduzierung ist die Schubstange 9 im Kern mit einer Bohrung 19 versehen.

Die Sekundärteile 4a bis 4d sind an der Außenseite der Schubstange 9 befestigt, vorzugsweise angeschraubt, geklemmt oder angeklebt. Die Sekundärteile 4a bis 4d können jeweils aus einzelnen Segmenten bestehen. Die Sekundärteile 4a bis 4d haben jeweils eine vorteilhaft aus Stahl oder aus einem anderen ferromagnetischen Material gefertigte Trägerstruktur, auf der Permanentmagnete unlösbar befestigt sind. Zur Kühlung der Sekundärteile 4a bis 4d sind in der Schubstange 9 (nicht dargestellte) Kühlbohrungen vorgesehen, die sich in Längsrichtung der Schubstange erstrecken und von einem vorzugsweise flüssigen Kühlmedium durchflossen werden. Es führt die entstehende Wärme ab. Wird wenig Wärme erzeugt oder sind die Anforderungen an die Temperaturkonstanz gering, können die Kühlbohrungen entfallen. Als Alternative kann das Kühlmedium auch durch die zentrale Bohrung 19 der Schubstange 9 geleitet werden.

Die Abstände zwischen den Primär- und den Sekundärteilen 3a bis 3d, 4a bis 4d sind so gewählt, daß der Luftspalt 5 ein so gering wie mögliches Nennmaß hat, damit die Energieausbeute des Motors sehr hoch ist. Zwischen den jeweiligen Primär- und Sekundärteilen treten sehr hohe magnetische Anziehungskräfte auf, die üblicherweise das Zwei- bis Dreifache der mit dem jeweiligen Linearmotor 2 erreichbaren Vorschubkraft betragen. Da die Linearmotoren 2 symmetrisch angeordnet sind, kompensieren sich die Anziehungskräfte aller Linearmotoren 2, bezogen auf die Schubstange 9, weitgehend, wodurch die Führungen 12 nur wenig belastet werden.

Die Schubstange 9 ist an ihren Ecken mit jeweils einer Abflachung 20 versehen, die unter 45° zur Längs- bzw. Querachse des Gehäuses 6 liegt und auf der jeweils eine Führungsschiene 10 befestigt ist. Sie erstrecken sich über die Länge des Gehäuses 6, während die Abflachungen 20 über die Länge der Schubstange 9 verlaufen. Die Führungsschienen sind vorzugsweise wälzgelagert und in Führungsschuhen 11 geführt. Sie sind in den entsprechenden Ecken des Gehäuses 6 angeordnet und auf Prismen 13 befestigt, die in den Ecken des Gehäuses 6 angeordnet sind. Die Prismen 13 haben unter 45° zur Längs- bzw. Quermittelebene des Gehäuses 6 liegende Schrägflächen 21, auf denen die Führungsschuhe 11 befestigt sind. Um eine optimale Lagerung der Schubstange 9 zu erhalten, sind für jede Führungsschiene 10 zwei Führungsschuhe 11 jeweils an einer der Stirnseiten des Gehäuses 6 vorgesehen.

An beiden Stirnseiten des Gehäuses 6 ist jeweils ein (nicht dargestelltes) Abdichtelement vorgesehen, das die Kontur der bewegten Elemente aus Schubstange 9, Sekundärteilen 4a bis 4d und Führungsschienen 10 mit geringem Abstand umschließt und so das Eindringen von Spänen, Kühlschmierstoffen und ähnlichem verhindert. Die beiden Enden der Schubstange 9 haben definierte Schnittstellen, die zur Verbindung mit den Bearbeitungszentren vorgesehen sind. Diese Schnittstellen dienen zur Befestigung der Schubstange 9 an den zu bewegenden Bauteilen, wie etwa Schlitten, zum Anschluß von Kühlmittelzu- und -ableitungen sowie zum Anschluß von Sensoren, die sich in den Sekundärteilen 4a bis 4d befinden. Die Sensoren können Temperatur- oder Beschleunigungssensoren sein.

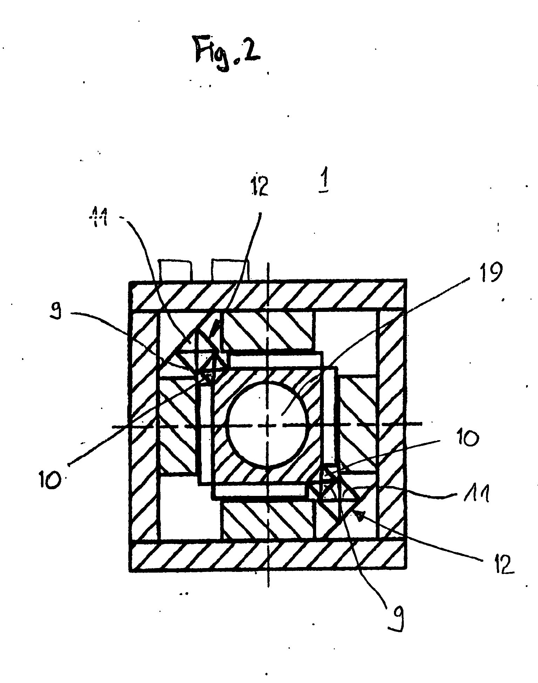

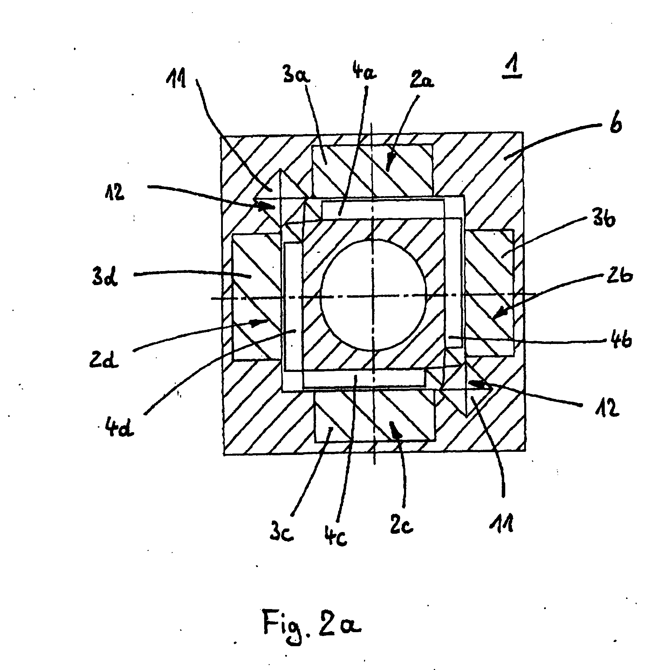

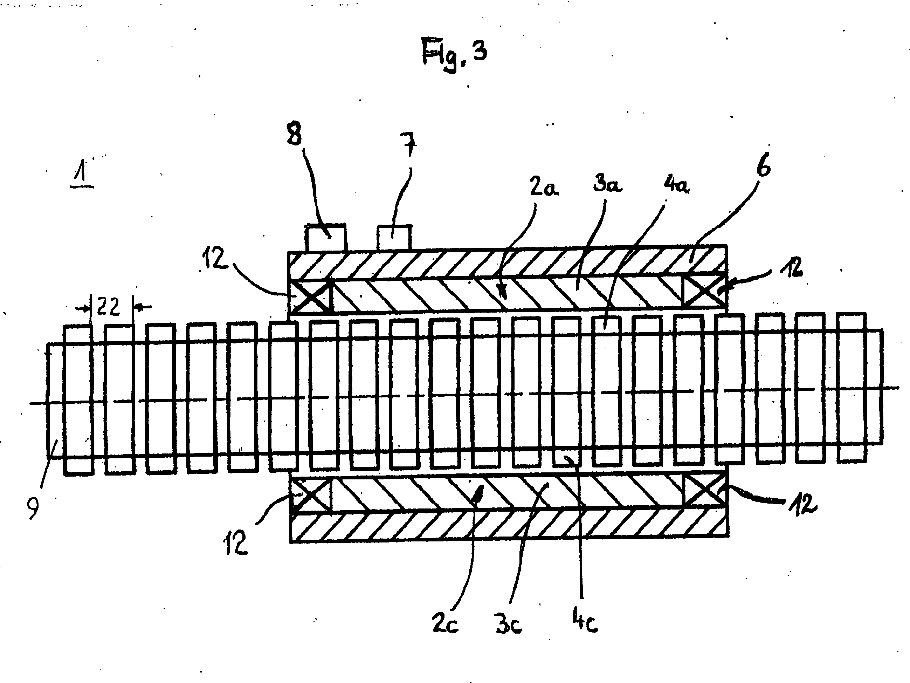

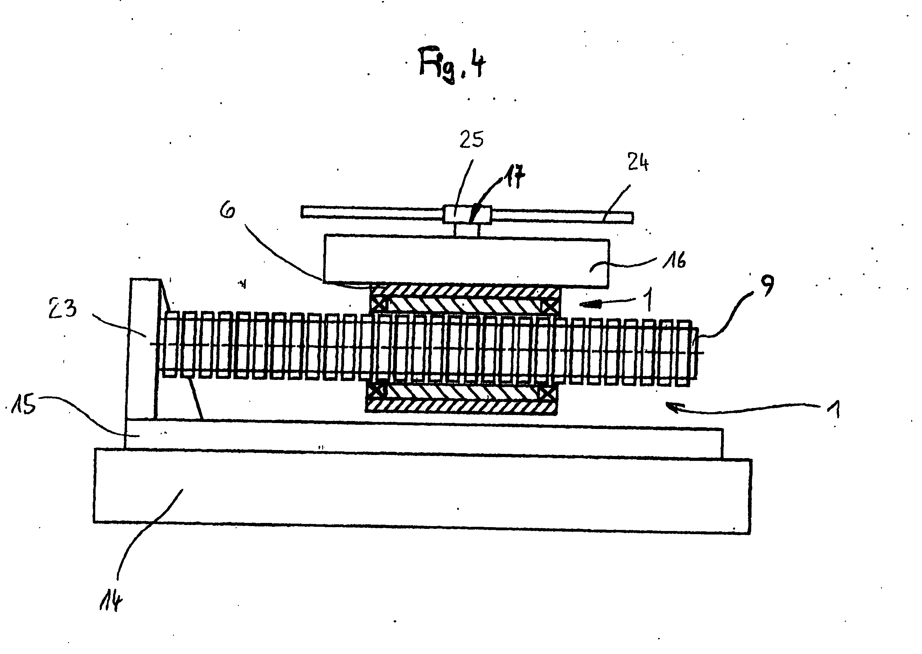

Fig. 2 zeigt ein Linearmotor-Antriebsmodul 1, dessen Schubstange 9 lediglich an diametral einander gegenüberliegenden Eckbereichen mit den Führungen 12 geführt ist. Im übrigen ist dieses Antriebsmodul 1 gleich ausgebildet wie die Ausführungsform gemäß Fig. 1. Die Führungen 12 haben die Führungsschienen 10 und die Führungsschuhe 11. Die Schubstange 9 ist mit der zentralen Längsbohrung 19 versehen.

Fig. 2a zeigt ein Linearmotor-Antriebsmodul 1, bei dem wesentliche Elemente der Linearmotoren 2a bis 2d und der Führungen 12 in das Gehäuse 6 integriert sind. Das Gehäuse 6 hat entsprechend den vorhergehenden Ausführungsformen eckigen, vorzugsweise quadratischen Querschnitt. Die Primärteile 3a bis 3d sind in die Wandung des Gehäuses 6 so eingebettet, daß sie an drei Seiten vom Gehäuse 6 umschlossen sind. Die den Sekundärteilen 4a bis 4d zugewandten Seiten der Primärteile 3a bis 3d sind frei. Die Sekundärteile 4a bis 4d sitzen entsprechend den vorhergehenden Ausführungsformen auf der Schubstange 9, die durch die Führungen 12 im Linearmotor-Antriebsmodul 1 geführt wird. Die Führungen 12 sind ebenso wie die Primärteile 3a bis 3d in das Gehäuse 6 in den Eckbereichen eingebettet.

Die Primärteile 3a bis 3d und die Führungen 12 sind im Unterschied zu den vorigen Ausführungsbeispielen fest in das Gehäuse 6 eingebaut, wodurch diese Elemente zu einer Baugruppe verschmelzen. Das Linearmotor-Antriebsmodul 1 hat somit einen sehr kompakten Aufbau und kann kostengünstig gefertigt werden. Im übrigen ist dieses Ausführungsbeispiel gleich ausgebildet wie die Ausführungsform nach Fig. 1.

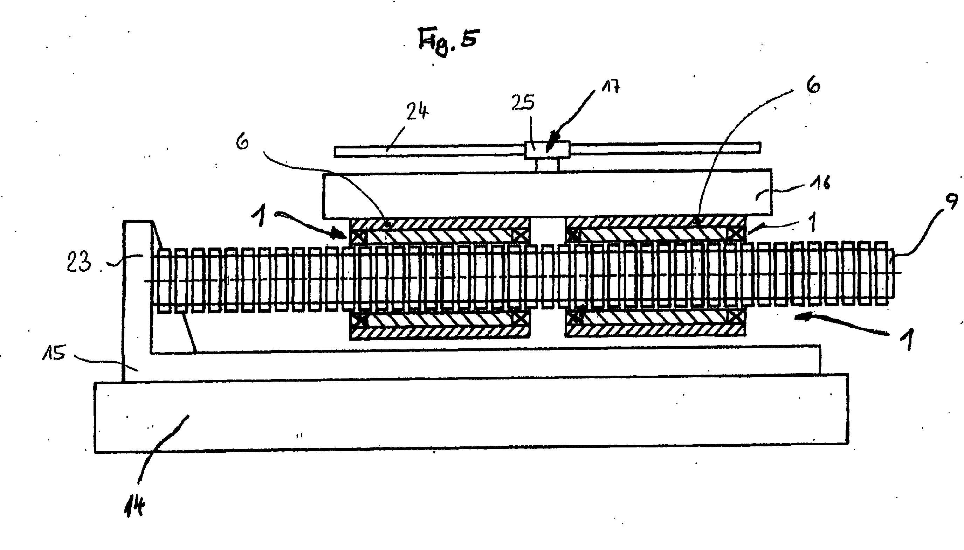

Fig. 3 zeigt das Antriebsmodul 1 gemäß Fig. 1 und 2 im Längsschnitt. Auf der Schubstange 9 sitzen die Sekundärteile der Linearmotoren, von denen in Fig. 3 die Linearmotoren 2a, 2c sowie die Sekundärteile 4a, 4c erkennbar sind. Die Sekundärteile 4a, 4c liegen mit geringem Abstand voneinander. Die Schubstange 9 ragt über beide Enden des Gehäuses 6, das mit den Anschlüssen 7 und 8 für die Stromversorgung sowie für das Kühlmittel versehen ist. Die Sekundärteile 4a, 4c enthalten Dauermagnete, die mit hoher Polteilung angeordnet sind. Durch die hohe Polteilung entsteht ein geringer Polabstand 22, der beispielsweise 36 mm beträgt. Durch die hohe Polteilung ergibt sich eine hohe Betriebsfrequenz des jeweiligen Linearmotors 2a, 2c. Die Sekundärteile 4a, 4c werden mit geringem Abstand von den Primärteilen 3a, 3c umgeben, die parallel zu den Sekundärteilen 4a, 4c nahezu über die gesamte, in Längsrichtung der Schubstange 9 gemessene Länge des Gehäuses 6 verlaufen.

Fig. 4 zeigt in schematischer Darstellung eine Vorschubachse einer Werkzeugmaschine mit einem Gestell 14, das in Form eines Maschinenbettes ausgebildet ist. Auf dem Gestell 14 befindet sich eine Konsole 15 mit einem quer abstehenden Lagerbock 23, an dem das eine Ende der Schubstange 9 befestigt ist. Der Lagerbock 23 bildet ein Festlager des Maschinenbettes 14. Das Gehäuse 6 des Antriebsmoduls 1 ist mit einem Schlitten 16 fest verbunden. Er trägt ein Längerimeßsystem 17, das vorzugsweise ein direkt messendes System ist und aus einem Längenmeßsystem 24 und einem Geberkopf 25 besteht.

Es ist möglich, die Schubstange 9 an beiden Enden mit einem Festlager, beispielsweise mittels jeweils eines Lagerbockes, abzustützen. Dadurch wird die Gesamtsteifigkeit des Systems erhöht. Aufgrund der Kühlung der Schubstange 9 und/oder der Linearmotoren 2a bis 2d ist keine Verspannung der Schubstange 9 zwischen den Festlagern zu erwarten.

Die Ausführungsform gemäß Fig. 5 unterscheidet sich vom Ausführungsbeispiel nach Fig. 4 lediglich dadurch, daß der Schlitten 16 von zwei mit geringem Abstand nebeneinander liegenden Linearmotoren 1 angetrieben wird. Sie werden von der gemeinsamen Schubstange 9 durchsetzt, die an einem Ende am Festlager 23 befestigt ist. Die beiden Antriebsmodule 1 sind gleich ausgebildet und werden im Betrieb längs der maschinenfesten Schubstange 9 verfahren. Der auf dem Gehäuse 6 befestigte Schlitten 16 trägt das Wegmeßsystem 17. Der Schlitten kann auf separaten, nicht dargestellten Führungsschienen geführt sein. Im übrigen ist dieses Ausführungsbeispiel gleich ausgebildet wie die Ausführungsform nach Fig. 4. Wie bei dieser Ausführungsform kann die Schubstange 9 gemäß Fig. 5 auch an beiden Enden in einem Festlager befestigt sein.

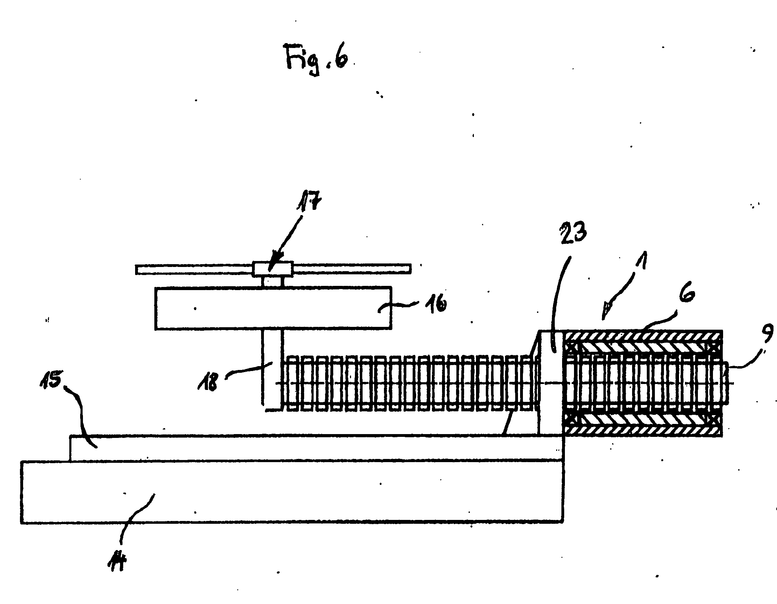

Fig. 6 zeigt eine weitere Möglichkeit zum Einbau des Antriebsmoduls 1 in eine Werkzeugmaschine. Das Gehäuse 6 des Antriebsmoduls 1 ist fest mit dem Festlager 23 verbunden, das an einer Seite der Konsole 15 vorgesehen ist. Das Gehäuse 6 liegt mit seiner Stirnseite an der Außenseite des Lagerbockes 23 an. Die Schubstange 9 durchsetzt eine Öffnung im Lagerbock 23. Am freien, im Bereich oberhalb der Konsole 15 liegenden Ende der Schubstange 9 ist eine aufwärts gerichtete Strebe 18 befestigt, die den Schlitten 16 mit dem Wegmeßsystem 17 trägt. Der Schlitten 16 führt aufgrund der Vorschubkraft des Antriebsmoduls 1 zusammen mit der Schubstange 9 eine Hubbewegung in Längsrichtung der Schubstange aus. Das Antriebsmodul 1 ist auf der von der Strebe 18 abgewandten Seite des Lagerbockes 23 vorgesehen, so daß es geschützt außerhalb der Maschine liegt. Die Konsole 15 ist auf dem Maschinengestell bzw. Maschinenbett 14 oder einem Fundament vorgesehen.

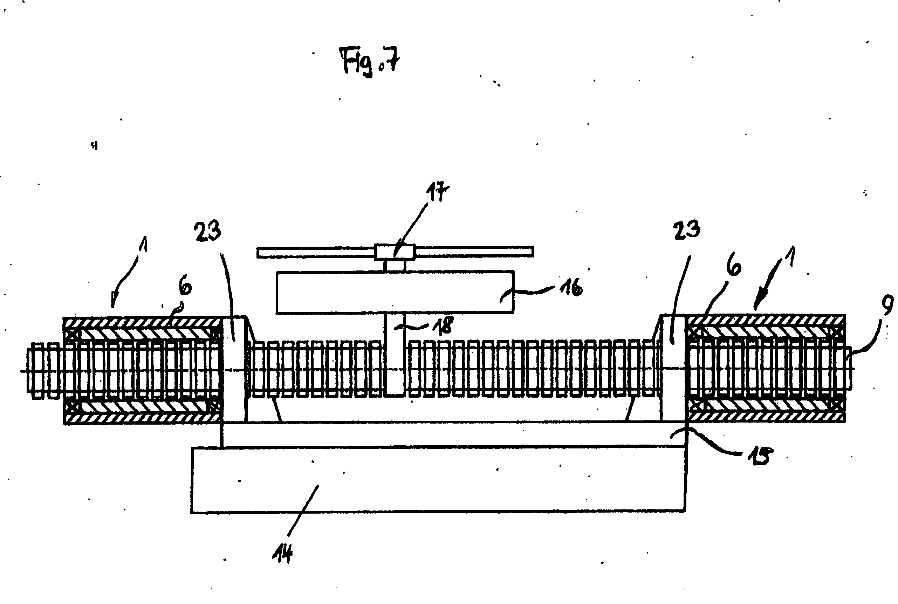

Die Vorschubachse gemäß Fig. 7 unterscheidet sich von der Vorschubachse nach Fig. 6 dadurch, daß die Schubstange 9 durch zwei Festlager 23 in Form von Lagerböcken ragt, die an beiden Seiten der auf dem Gestell 14 vorgesehenen Konsole 15 befestigt sind. An den voneinander abgewandten Seiten der Lagerböcke 23 ist stirnseitig das Gehäuse 6 jeweils eines Antriebsmoduls 1 befestigt. Die Schubstange 9 ragt durch die beiden Lagerböcke 23 und die Gehäuse 6 der beiden Antriebsmodule 1. Im Bereich zwischen den Lagerböcken 23 ist auf der Schubstange 9 die Strebe 18 befestigt, die den Schlitten 16 mit dem Wegmeßsystem 17 trägt. Durch entsprechenden Antrieb der Module 1 wird die Schubstange 1 mit dem Schlitten 16 in der gewünschten Richtung axial verschoben. Da zwei Antriebsmodule 1 eingesetzt werden, ist dieser beschriebene Linearantrieb für hohe Belastungen geeignet.

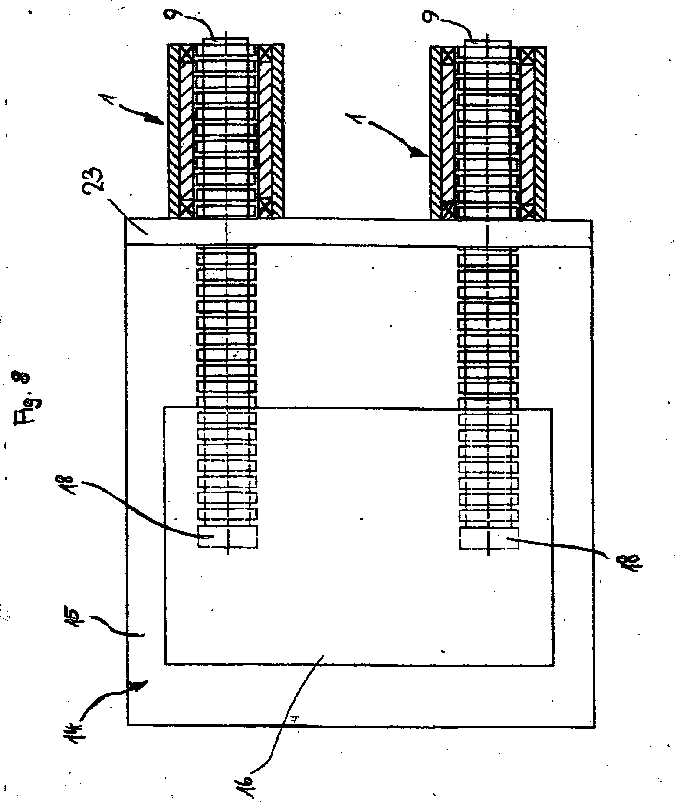

Die Vorschubachse gemäß Fig. 8 entspricht weitgehend der Ausführungsform gemäß Fig. 6. Im Unterschied zu diesem Ausführungsbeispiel sind am Lagerbock 23 zwei Antriebsmodule 1 mit Abstand nebeneinander angeordnet. Die Schubstangen 9 dieser beiden Antriebsmodule 1 ragen durch den Lagerbock 23 und tragen über jeweils eine Strebe 18 am freien Ende den Schlitten 16. Die beiden Antriebsmodule 1 werden synchron betätigt, so daß die parallel zueinander auf gleicher Höhe liegenden Schubstangen 9 gleichsinnig verschoben werden. Der Schlitten 16 ist breit ausgebildet und wird von den beiden Schubstangen 9 zuverlässig angetrieben. Der Schlitten 16 befindet sich wiederum im Bereich oberhalb der Konsole 15 des Maschinengestelles 14.

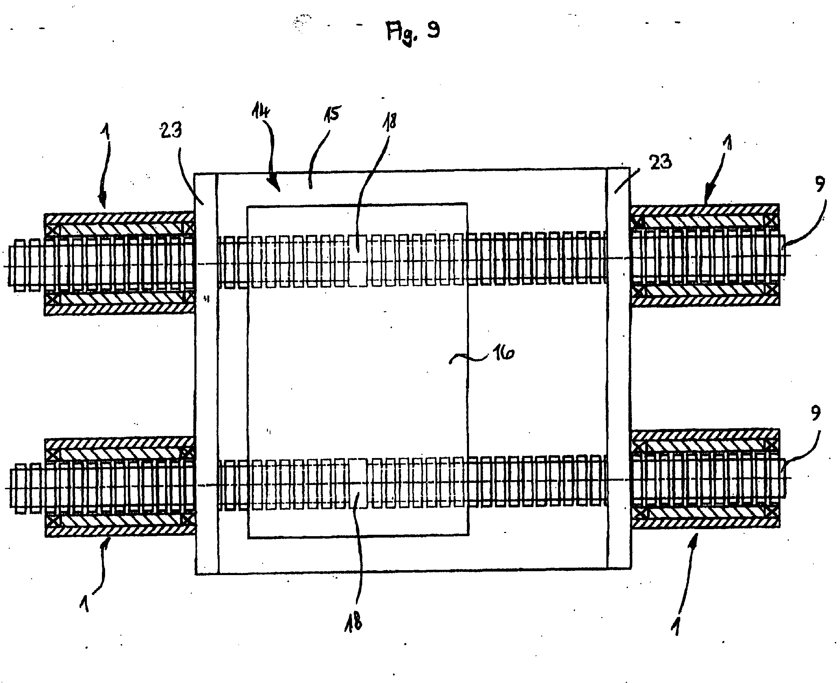

Fig. 9 zeigt eine Vorschubachse, die sich vom Ausführungsbeispiel nach Fig. 7 nur dadurch unterscheidet, daß die Antriebsmodule 1 mit der gemeinsamen Schubstange 9 paarweise vorhanden sind. An den beiden Lagerböcken 23 der Konsole 15 sind an den voneinander abgewandten Außenseiten jeweils zwei Antriebsmodule 1 befestigt. Die Antriebsmodule 1 an jedem Lagerbock 23 liegen mit Abstand voneinander. Die zugehörigen beiden Schubstangen 9 liegen parallel zueinander und ragen durch die Lagerböcke 23.

Im Bereich zwischen den Lagerböcken 23 sitzt auf den beiden Schubstangen 9 jeweils die Strebe 18. Der Schlitten 16 ist über zwei Streben 18 mit der Schubstange verbunden.

Zum Verfahren des Schlittens 16 werden die vier Antriebsmodule 1 so angesteuert, daß die beiden Schubstangen 9 in gleicher Richtung und in gleichem Maße in der gewünschten Richtung verschoben werden.

Dabei ist ein Betrieb der Motoren als gemeinsame Parallel- oder Reihenschaltung oder der Betrieb als Einzelmotor mit regelungstechnischer Parallelschaltung zu anderen Motoren möglich.

Bei den beschriebenen Vorschubachsen können die Antriebsmodule eine Ausbildung gemäß Anspruch 1 bis 15 haben. Es ist sogar möglich, bei den Ausführungsformen, bei denen wenigstens zwei Antriebsmodule 1 an der Werkzeugmaschine vorgesehen sind, die Antriebsmodule gemäß Anspruch 1 bis 15 gemischt einzusetzen. Die Linearmotoren 2 im Antriebsmodul 1 sind so angeordnet, daß sich die magnetischen Anziehungskräfte zwischen den einzelnen Linearmotoren aufheben. Die Antriebsmodule 1 können schnell ein- und ausgebaut werden. Je nach konstruktiver Gestaltung können die Gehäuse 6 des Antriebsmoduls 1 fest mit dem Maschinengestell der Werkzeugmaschine verbunden sein (Fig. 6 bis 9). Die Antriebsmodule 1, können aber auch mit ihrem Gehäuse 6 fest mit dem in Vorschubrichtung beweglichen Schlitten 16 gekoppelt sein, wie die Ausführungsbeispiele gemäß den Fig. 4 und 5 beispielhaft zeigen.

Das Antriebsmodul 1 kann mit wenigstens einer Schnittstelle zur Übertragung von Informationen versehen sein.

Bei den beschriebenen Ausführungsformen ist vereinfacht ein Schlitten als Vorschubelement dargestellt. Dieser Schlitten kann bei einer Werkzeugmaschine beispielhaft ein Werkzeugschlitten, ein Werkstückschlitten, ein Werkzeugkopf und dergleichen sein. Die Antriebsmodule können in alle Linearachsen einer Werkzeugmaschine eingebaut werden, in jeder beliebigen Orientierung.

Die Antriebsmodule 1 sind bei hoher Energiedichte kompakt ausgebildet und lassen sich insbesondere einfach montieren und demontieren.

## Patentansprüche

1. Antriebssystem mit einem Linearmotor (2a bis 2b), der wenigstens ein Schubelement (9) aufweist und in einem Gehäuse (6) untergebracht ist, in dem mindestens ein weiterer Linearmotor (2a bis 2d) so untergebracht ist, daß sich die magnetischen Anziehungskräfte zwischen den einzelnen Linearmotoren (2a bis 2d) zumindest weitgehend aufheben, wobei die Linearmotoren Primärteile (3a bis 3d) und Sekundärteile (4a bis 4d) aufweisen,
**dadurch gekennzeichnet, daß** die Primärteile (3a bis 3d) des Antriebssystems elektrisch parallel geschaltet und in das Gehäuse (6) integriert sind und daß das Schubelement (9) an wenigstens zwei diametral einander gegenüberliegenden Ecken geführt ist.

2. Antriebssystem nach Anspruch 1,
**dadurch gekennzeichnet, daß** das Gehäuse (6) mit den Linearmotoren (2a bis 2d) ein Antriebsmodul (1) bildet.

3. Antriebssystem nach Anspruch 1 oder 2,
**dadurch gekennzeichnet, daß** das Antriebssystem (1) wenigstens eine Schnittstelle (7, 8) zur Übertragung elektrischer Energie und/oder zur Zu- und Abführung von Kühlmedium aufweist.

4. Antriebssystem nach einem der Ansprüche 1 bis 3,
**dadurch gekennzeichnet, daß** das Antriebssystem (1) wenigstens eine Schnittstelle zur Übertragung von Informationen hat.

5. Antriebssystem nach einem der Ansprüche 1 bis 4,
**dadurch gekennzeichnet, daß** das Antriebssystem (1) aus wenigstens einem Aktivteil und wenigstens einem Passivteil besteht, von denen das Aktivteil vorzugsweise durch fest mit dem Gehäuse (6) und das Passivteil vorzugsweise durch fest mit Schubelement (9) verbundene Elemente gebildet ist.

6. Antriebssystem nach einem der Ansprüche 1 bis 5,
**dadurch gekennzeichnet, daß** die Primärteile (3a bis 3d) des Antriebssystems (1) innerhalb des Gehäuses (6) verschaltet sind.

7. Antriebssystem nach einem der Ansprüche 1 bis 6,
**dadurch gekennzeichnet, daß** das Gehäuse (6) des Antriebssystems (1) und/oder die Primärteile (3a bis 3d) gekühlt sind.

8. Antriebssystem nach einem der Ansprüche 1 bis 7,
**dadurch gekennzeichnet, daß** zwischen den Primärteilen (3a bis 3d) und dem Gehäuse (6) des Antriebssystems (1) ein wärmeisolierendes System vorgesehen ist.

9. Antriebssystem nach einem der Ansprüche 1 bis 8,
**dadurch gekennzeichnet, daß** innerhalb des Antriebssystems (1), das vorzugsweise durch wenigstens einen Kühlkreislauf temperiert ist, ein Kühlsystem vorgesehen ist.

10. Antriebssystem nach einem der Ansprüche 1 bis 9,
**dadurch gekennzeichnet, daß** auf einem Passivteil des Antriebssystems (1) mehrere Aktivteile seriell angeordnet sind.

11. Antriebssystem nach einem der Ansprüche 1 bis 10,
**dadurch gekennzeichnet, daß** das Passivteil (4a bis 4d) des Antriebssystems (1) Permanentmagnete aufweist, die auf dem Schubelement (9) befestigt sind.

12. Antriebssystem nach einem der Ansprüche 1 bis 11,
**dadurch gekennzeichnet, daß** das Antriebssystem (1) wenigstens einen Sensor aufweist, der vorzugsweise ein Ferrarisensor ist und/oder zur Dämpfung eines Regelkreises einen Beschleunigungswert ermittelt.

13. Antriebssystem nach einem der Ansprüche 1 bis 12,
**dadurch gekennzeichnet, daß** das Schubelement (9) eine Schubstange ist, die vorzugsweise einen eckigen, vorzugsweise quadratischen Querschnitt hat.

14. Antriebssystem nach einem der Ansprüche 1 bis 13,
**dadurch gekennzeichnet, daß** das Schubelement (9) eine zentrale Bohrung (19) aufweist und vorzugsweise nebeneinander angeordnete Sekundärteile (4a bis 4c) trägt.

15. Antriebssystem nach einem der Ansprüche 1 bis 14,
**dadurch gekennzeichnet, daß** das Schubelement (9) an allen Ecken geführt ist.

16. Vorschubachse einer Werkzeugmaschine mit wenigstens einem Antriebssystem gemäß einem der Ansprüche 1 bis 15, mit einem Maschinengestell, von dem das Antriebssystem abgestützt ist,
**dadurch gekennzeichnet, daß** auf dem Maschinengestell (14, 15) wenigstens ein Festlager (23) vorgesehen ist, an dem das Antriebssystems(1) befestigt ist.

17. Vorschubachse einer Werkzeugmaschine nach Anspruch 16,
**dadurch gekennzeichnet, daß** das Gehäuse (6) des Antriebssystems (1) mit dem Festlager (23) fest verbunden ist.

18. Vorschubachse einer Werkzeugmaschine nach Anspruch 16,
**dadurch gekennzeichnet, daß** das Gehäuse (6) des Antriebssystems (1) fest mit einem in Vorschubrichtung beweglichen Schlitten (16) verbunden ist.

19. Vorschubachse einer Werkzeugmaschine nach einem der Ansprüche 16 bis 18,
**dadurch gekennzeichnet, daß** das Passivteil (4a bis 4d) des Antriebssystems (1) fest mit dem in Vorschubrichtung feststehenden Festlager (23) verbunden ist.

20. Vorschubachse einer Werkzeugmaschine nach einem der Ansprüche 16 bis 18,
**dadurch gekennzeichnet, daß** das Passivteil (4a bis 4d) des Antriebssystems(1) fest mit dem in Vorschubrichtung beweglichen Schlitten (16) verbunden ist.

21. Vorschubachse einer Werkzeugmaschine nach einem der Ansprüche 16 bis 20,
**dadurch gekennzeichnet, daß** für jede lineare Vorschubachse der Werkzeugsmaschine ein Antriebssystem (1) vorgesehen ist.

22. Vorschubachse einer Werkzeugmaschine nach einem der Ansprüche 16 bis 21,
**dadurch gekennzeichnet, daß** für jede lineare Vorschubachse mehrere Antriebssysteme (1) in paralleler Anordnung vorgesehen sind.

23. Vorschubachse einer Werkzeugmaschine nach einem der Ansprüche 16 bis 22,
**dadurch gekennzeichnet, daß** das Schubelement (9) des Antriebssystems (1) mit einem Ende am Festlager (23) befestigt ist.

24. Vorschubachse einer Werkzeugmaschine nach einem der Ansprüche 16 bis 22,
**dadurch gekennzeichnet, daß** das Schubelement (9) des Antriebssystems (1) durch das Festlager (23) ragt.

25. Vorschubachse einer Werkzeugmaschine nach einem der Ansprüche 16 bis 24,
**dadurch gekennzeichnet, daß** das Schubelement (9) an beiden Enden mit jeweils einem Antriebssystem (1) wirkverbunden ist.

## Claims

1. Drive system with a linear motor (2a to 2b) comprising at least one push element
(9) and installed in a housing (6) in which at least one further linear motor (2a to 2d) is accommodated so that the magnetic attractive forces between the individual linear motors (2a to 2d) neutralise themselves at least to a large extent, the linear motors comprise primary components (3a to 3d) and secondary components (4a to 4d),
**characterised in that** the primary components (3a to 3d) of the drive system are switched electrically parallel and integrated within the housing (6) and that the push element (9) is guided at at least two corners opposing each other diametrally.

2. Drive system according to claim 1,
**characterised in that** the housing (6) forms with the linear motors (2a to 2d) a drive module (1).

3. Drive system according to claim 1 or 2,
**characterised in that** the drive system (1) comprises at least one interface (7, 8) for the transfer of electric energy and/or for the supply and eduction of cooling medium.

4. Drive system according to one of the claims 1 to 3,
**characterised in that** the drive system (1) has at least one interface for the transfer of information.

5. Drive system according to one of the claims 1 to 4,
**characterised in that** the drive system (1) is composed of at least one active component and at least one passive component, of which the active component is formed preferably by elements connected firmly with the housing (6) and the passive component is formed preferably by elements connected firmly with the push element (9).

6. Drive system according to one of the claims 1 to 5,
**characterised in that** the primary components (3a to 3d) of the drive system (1) are interconnected within the housing (6).

7. Drive system according to one of the claims 1 to 6,
**characterised in that** the housing (6) of the drive system (1) and/or the primary components (3a to 3d) are cooled.

8. Drive system according to one of the claims 1 to 7,
**characterised in that** between the primary components (3a to 3d) and the housing (6) of the drive system (1) a thermal insulation system is provided.

9. Drive system according to one of the claims 1 to 8,
**characterised in that** within the drive system (1), which is preferably tempered by at least one cooling circuitry, a cooling system is provided.

10. Drive system according to one of the claims 1 to 9,
**characterised in that** several active components are serially disposed on a passive component of the drive system (1).

11. Drive system according to one of the claims 1 to 10,
**characterised in that** the passive component (4a to 4d) of the drive system (1) comprises permanent magnets, which are fixed on the push element (9).

12. Drive system according to one of the claims 1 to 11,
**characterised in that** the drive system (1) comprises at least one sensor, which preferably is a Ferraris sensor and/or acquires an acceleration value for the attenuation of a closed loop.

13. Drive system according to one of the claims 1 to 12,
**characterised in that** the push element (9) is a push rod comprising preferably an angular, preferably square cross section.

14. Drive system according to one of the claims 1 to 13,
**characterised in that** the push element (9) comprises a central bore (19) and bears preferably secondary components (4a to 4c) juxtaposed to each other.

15. Drive system according to one of the claims 1 to 14,
**characterised in that** the push element (9) is guided at all corners.

16. Feed axis of a machine tool with at least one drive system according to one of the claims 1 to 15 with a chassis supporting the drive system,
**characterised in that** on the chassis (14, 15) at least one fixed bearing (23) is provided onto which the drive system (1) is fixed.

17. Feed axis of a machine tool according to claim 16,
**characterised in that** the housing (6) of the drive system (1) is firmly connected with the fixed bearing (23).

18. Feed axis of a machine tool according to claim 16,
**characterised in that** the housing (6) of the drive system (1) is firmly connected with a slide (18) movable in the feed direction.

19. Feed axis of a machine tool according to one of the claims 16 to 18,
**characterised in that** the passive component (4a to 4d) of the drive system (1) is firmly connected with the fixed bearing (23) stationary in the feed direction.

20. Feed axis of a machine tool according to one of the claims 16 to 18,
**characterised in that** the passive component (4a to 4d) of the drive system (1) is firmly connected with the slide (16) movable in the feed direction.

21. Feed axis of a machine tool according to one of the claims 16 to 20,
**characterised in that** for each linear feed axis of the machine tool several drive systems (1) are provided.

22. Feed axis of a machine tool according to one of the claims 16 to 21,
**characterised in that** for each linear feed axis several drive systems (1) are provided in parallel arrangement.

23. Feed axis of a machine tool according to one of the claims 16 to 22,
**characterised in that** the push element (9) of the drive system (1) is fastened with one end at the fixed bearing (23).

24. Feed axis of a machine tool according to one of the claims 16 to 22,
**characterised in that** the push element (9) of the drive system (1) projects through the fixed bearing (23).

25. Feed axis of a machine tool according to one of the claims 16 to 24,
**characterised in that** at each end of the push element (9) is effectively connected with a drive system (1).

## Revendications

1. Système d'entraînement à moteur linéaire (2a à 2b) comportant un élément de poussée (9) au moins et disposé dans un carter (6), où au moins un autre moteur linéaire (2a à 2d) est disposé en sorte que les forces d'attraction magnétique entre les différents moteurs linéaires (2a à 2d) s'annulent au moins en grande partie, les moteurs linéaires présentant des pièces primaires (3a à 3d) et des pièces secondaires (4a à 4d),
**caractérisé en ce que** les pièces primaires (3a à 3d) du système d'entraînement sont montées électriquement en parallèle et intégrées au carter (6), et **en ce que** l'élément de poussée (9) est guidé sur au moins deux coins diamétralement opposés.

2. Système d'entraînement selon la revendication 1,
**caractérisé en ce que** le carter (6) forme un module d'entraînement (1) avec les moteurs linéaires (2a à 2d).

3. Système d'entraînement selon la revendication 1 ou 2,
**caractérisé en ce que** le système d'entraînement (1) présente au moins une interface (7, 8) pour la transmission de courant électrique et/ou pour l'amenée/l'évacuation d'un milieu réfrigérant.

4. Système d'entraînement selon l'une des revendications 1 à 3,
**caractérisé en ce que** le système d'entraînement (1) a au moins une interface pour la transmission d'informations.

5. Système d'entraînement selon l'une des revendications 1 à 4,
**caractérisé en ce que** le système d'entraînement (1) se compose d'au moins une pièce active et d'au moins une pièce passive, la pièce active étant préférentiellement formée par des éléments fixement reliés au carter (6), et la pièce passive préférentiellement par des éléments fixement reliés à l'élément de poussée (9).

6. Système d'entraînement selon l'une des revendications 1 à 5,
**caractérisé en ce que** les pièces primaires (3a à 3d) du système d'entraînement (1) sont raccordées à l'intérieur du carter (6).

7. Système d'entraînement selon l'une des revendications 1 à 6,
**caractérisé en ce que** le carter (6) du système d'entraînement (1) et/ou les pièces primaires (3a à 3d) sont refroidies.

8. Système d'entraînement selon l'une des revendications 1 à 7,
**caractérisé en ce qu'**un système isolant thermique est prévu entre les pièces primaires (3a à 3d) et le carter (6) du système d'entraînement (1).

9. Système d'entraînement selon l'une des revendications 1 à 8,
**caractérisé en ce qu'**un système de refroidissement est prévu à l'intérieur du système d'entraînement (1) préférentiellement tempéré par un circuit de refroidissement au moins.

10. Système d'entraînement selon l'une des revendications 1 à 9,
**caractérisé en ce que** plusieurs pièces actives sont disposées en série sur une pièce passive du système d'entraînement (1).

11. Système d'entraînement selon l'une des revendications 1 à 10,
**caractérisé en ce que** la pièce passive (4a à 4d) du système d'entraînement (1) comporte des aimants permanents fixés sur l'élément de poussée (9).

12. Système d'entraînement selon l'une des revendications 1 à 11,
**caractérisé en ce que** le système d'entraînement (1) présente au moins un senseur, lequel est préférentiellement un senseur Ferrari et/ou saisit une valeur d'accélération pour l'amortissement d'un circuit d'asservissement.

13. Système d'entraînement selon l'une des revendications 1 à 12,
**caractérisé en ce que** l'élément de poussée (9) est une barre de poussée ayant préférentiellement une section polygonale, préférentiellement carrée.

14. Système d'entraînement selon l'une des revendications 1 à 13,
**caractérisé en ce que** l'élément de poussée (9) présente un alésage central (19), et supporte des pièces secondaires (4a à 4c) préférentiellement disposées côte à côte.

15. Système d'entraînement selon l'une des revendications 1 à 14,
**caractérisé en ce que** l'élément de poussée (9) est guidé sur tous les coins.

16. Axe d'avance d'une machine-outil avec au moins un système d'entraînement selon l'une des revendications 1 à 15, avec un bâti de machine supportant le système d'entraînement,
**caractérisé en ce qu'**un palier fixe (23) au moins est prévu sur le bâti de machine (14, 15), sur lequel le système d'entraînement (1) est fixé.

17. Axe d'avance d'une machine-outil selon la revendication 16,
**caractérisé en ce que** le carter (6) du système d'entraînement (1) est fixement relié au palier fixe (23).

18. Axe d'avance d'une machine-outil selon la revendication 16,
**caractérisé en ce que** le carter (6) du système d'entraînement (1) est fixement relié à un chariot (16) mobile dans le sens d'avance.

19. Axe d'avance d'une machine-outil selon l'une des revendications 16 à 18,
**caractérisé en ce que** la pièce passive (4a à 4d) du système d'entraînement (1) est fixement reliée au palier fixe (23) dans le sens d'avance.

20. Axe d'avance d'une machine-outil selon l'une des revendications 16 à 18,
**caractérisé en ce que** la pièce passive (4a à 4d) du système d'entraînement (1) est fixement reliée au chariot mobile (16) dans le sens d'avance.

21. Axe d'avance d'une machine-outil selon l'une des revendications 16 à 20,
**caractérisé en ce qu'**un système d'entraînement (1) est prévu pour chaque axe d'avance linéaire de la machine-outil.

22. Axe d'avance d'une machine-outil selon l'une des revendications 16 à 21,
**caractérisé en ce que** plusieurs systèmes d'entraînement (1) sont prévus en disposition parallèle pour chaque axe d'avance linéaire.

23. Axe d'avance d'une machine-outil selon l'une des revendications 16 à 22,
**caractérisé en ce que** l'élément de poussée (9) du système d'entraînement (1) est fixé par une extrémité au palier fixe (23).

24. Axe d'avance d'une machine-outil selon l'une des revendications 16 à 22,
**caractérisé en ce que** l'élément de poussée (9) du système d'entraînement (1) traverse le palier fixe (23).

25. Axe d'avance d'une machine-outil selon l'une des revendications 16 à 24,
**caractérisé en ce que** chaque extrémité de l'élément de poussée (9) est fonctionnellement reliée à un système d'entraînement (1) respectif.
